# EUROPEAN PATENT APPLICATION

(11) **EP 4 357 956 A1**
(43) Date of publication of application: **24.04.2024**
(21) Application number: 23204846.2
(22) Date of filing: 20.10.2023
(51) Int. Cl.: G06F 21/62

(54) **DOCUMENT INSTANCE PROTECTION FRAMEWORK**

(30) Priority: 21.10.2022 US 202217970898
(71) Applicant: SAP SE, 69190 Walldorf (DE)
(72) Inventor: Mahapatra, Ramachandra, 69190 Walldorf (DE); Chilamakuri, Sateesh Babu, 69190 Walldorf (DE)
(74) Representative: Müller-Boré & Partner Patentanwälte PartG mbB

(57) **Abstract**

Embodiments integrate with an authorization service (e.g., OAUTH) to implement document protection. In response to a document scheduling request, a protection engine reads a protection policy including a sensitivity label, from the authorization service. The protection engine encrypts content of the document, and stores the document including the encrypted content and a header, in a non-transitory computer readable storage medium (e.g., a database). At a conclusion of the document scheduling phase, the protection engine may send a status (e.g., successful; failed) of the document scheduling. Next, in response to receiving a subsequent document view request, the protection engine references the header to communicate with the authorization service. The protection engine decrypts the content based upon information received from the authorization service, and provides the document including decrypted content for viewing.

## Description

### BACKGROUND

Unless otherwise indicated herein, the approaches described in this section are not prior art to the claims in this application and are not admitted to be prior art by inclusion in this section.

The convenience and increasing processing power of mobile devices (such as phones and tablets) has led to their adoption for many different uses. This may in turn give rise to security concerns, where a mobile device user receives confidential information from outside of a secured network.

In particular, a secured network may not be able to exercise protection over documents that are shared via email or texting. Moreover, such documents may be the subject of updating with refreshed content, with the secured network lacking effective control over external destinations such as a hard drive, or those designated by File Transfer Protocol (FTP) or Simple Mail Transfer Protocol (SMTP).

### SUMMARY

Embodiments integrate with an authorization service (e.g., OAUTH) in order to implement document protection. In response to a document scheduling request, a protection engine reads a protection policy including a sensitivity label, from the authorization service. The protection engine encrypts content of the document, and stores the document including the encrypted content and a header, in a non-transitory computer readable storage medium (e.g., a database). At a conclusion of the document scheduling phase, the protection engine may send a status (e.g., successful; failed) of the document scheduling. Next, in response to receiving a subsequent document view request, the protection engine references the header to communicate with the authorization service. The protection engine decrypts the content based upon information received from the authorization service, and provides the document including decrypted content for viewing.

The following detailed description and accompanying drawings provide a better understanding of the nature and advantages of various embodiments.

### BRIEF DESCRIPTION OF THE DRAWINGS

Figure 1 shows a simplified diagram of a system according to an embodiment.
Figure 2 shows a simplified flow diagram of a method according to an embodiment.
Figure 3 shows an overview of a workflow of implementing document instance protection system according to the example.
Figure 4 shows an overview of a workflow of reading sensitivity labels according to an example.
Figure 5 shows an overview of a workflow of details of applying a sensitivity label to a document instance according to the example.
Figure 6 shows an overview of a workflow of viewing a protected document instance according to the example.
Figure 7 illustrates hardware of a special purpose computing machine configured to implement document instance protection according to an embodiment.
Figure 8 illustrates an example computer system.

### DETAILED DESCRIPTION

Described herein are methods and apparatuses that implement a document instance protection framework. In the following description, for purposes of explanation, numerous examples and specific details are set forth in order to provide a thorough understanding of embodiments according to the present invention. It will be evident, however, to one skilled in the art that embodiments as defined by the claims may include some or all of the features in these examples alone or in combination with other features described below, and may further include modifications and equivalents of the features and concepts described herein.

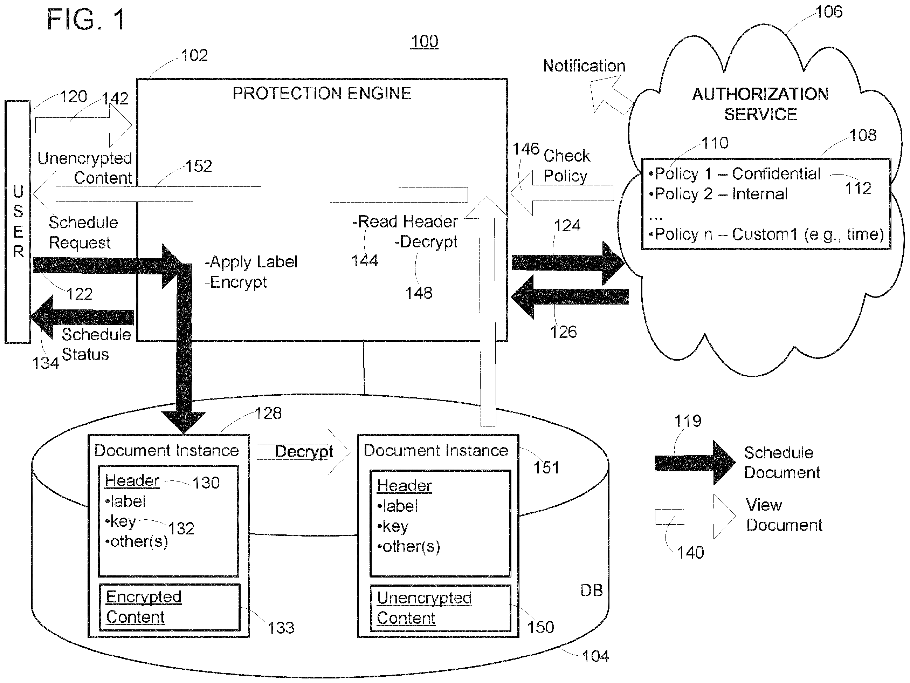

Figure 1 shows a simplified view of an example system that is configured to implement document instance protection according to an embodiment. Specifically, system 100 comprises a protection engine 102 that is in communication with a non-transitory computer readable storage medium 104.

The protection engine is also in communication with an authorization service 106. The authorization service may be cloud-based, and may operate according to a standard (such as the OAUTH standard).

The authorization service has stored thereon, a set 108 of authorization policies 110 including corresponding sensitivity labels 112. Such authorization policies can be standard in nature, e.g.:
- sensitivity label = "confidential" indicating access is restricted in some manner; or
- sensitivity label = "internal" indicating document is not to be circulated outside of an entity.

Alternatively, such authorization policies can be customized in nature, e.g.:
- sensitivity label = "custom1" according to which content is not to be circulated over a given time period;
- sensitivity label = "custom2" according to which content is not to be circulated outside of a given circle of individuals (e.g., those with management roles, or a particular product team).

Authorization policies can include terms that are based upon one or more of:
- Document Creator
- Document Consumer
- Access Right (e.g.: Read only; Copy only; Read/Write)
- Time
- Geography (e.g., user location to access)
- Role (ordinary user; supervisor; admin)
- Team (legal; finance; HR; board of directors; others)
- Document Type
- Specific Document Content
- Revocation
- Notification

During an initial document scheduling phase 119, the protection engine receives from a user 120, a request to schedule 122 circulation of the document. In response to the scheduling request, the engine contacts 124 the authorization server and reads 126 therefrom the sensitivity label.

Next, the protection engine applies the sensitivity label to the scheduled document instance 128 via a created header 130, storing same in the non-transitory computer readable storage medium. The header may include the sensitivity label, a cryptographic key 132, and other information.

The document instance is then accordingly encrypted per the sensitivity label, to include encrypted content 133. Such encryption of the proprietary document protects it from being viewed by unauthorized users.

Having created and stored the encrypted content, the engine can provide a schedule status 134. Such status may indicate whether the scheduling has been successful (or not).

Next, during a subsequent document viewing phase 140, the engine receives from the user, a request to view 142 the document. The engine will then read 144 the header section and retrieve 146 from the authorization server, the policy details of the document based upon the sensitivity label.

The authorization server will then try to authenticate the user based on the retrieved information and the applied policy protection. This will also help to respect the policy specific configuration established by the administrative user of the organization (e.g., sending an email or notification; and/or revoking the operation). In case of unauthorized access, a notification can be sent by the OAuth server based on a configuration.

Once authentication is successful, using the key in the header per the policy, the document will be decrypted 148. Then, the decrypted content 150 of the document instance 151 can be rendered for successful viewing 152 by the user.

Embodiments of document instance protection frameworks as disclosed herein may offer one or more benefits. Specifically, one possible benefit is flexibility, as is described in connection with the following possible usage scenario.

In this usage scenario, suppose that a first user X is scheduling a document, and it needs to be sent to two others (e.g., user Y and user Z) for collaborative purposes. Embodiments allow a customization to be provided that permits the user X to select different protection levels for the two other users Y and Z.

Thus, the document may be sent from user X to user Y with a protection level as confidential. By contrast, the document may be sent from user X to user Z with a protection level as internal.

Moreover, while the above usage scenario describes established, well-known protection levels (e.g.: confidential; internal), this is not required. Embodiments implementing document instance protection may allow for the implementation of specific, tailored protection policies for different users. For example, the user X may be afforded an access right limited in time, geographic location, and/or other term(s).

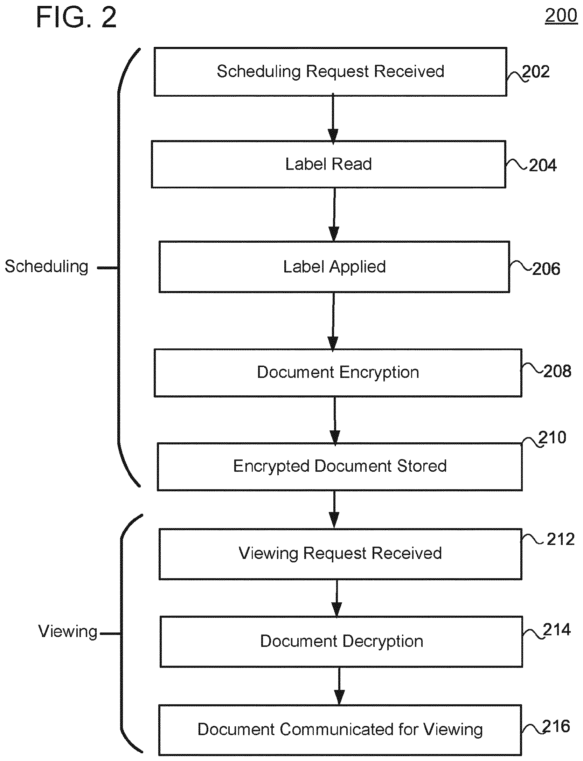

Figure 2 is a flow diagram of a method 200 according to an embodiment. At 202, a scheduling request of a document is received.

At 204, a label is read from a policy of an authorization service. At 206, the label is applied to a header of the document.

At 208, the document is encrypted according to a key present in the header. At 210, the document including the header is stored.

At 212, a viewing request of the document is received. At 214, based upon the label the document is decrypted. At 216 the document is communicated for viewing.

Further details regarding document instance protection according to various embodiments, are now provided in connection with the following example. In this particular example, document instance protection is implemented with the SAP BusinessObjects Enterprise (BOE) that is available from SAP SE of Walldorf, Germany.

### Example

An organization may configure policies for accessing documents in an authentication server (OAuth). Once these policies are applied, a document can be tracked regardless of where it has been stored or shared, with access being revoked if appropriate.

The restriction on document access which can be afforded by the SAP BOE system, may be achieved with the help of ACL (Access Control Levels) imposing certain rights.

Embodiments allow protecting BOE scheduled instances including those which contain refreshed data. Moreover, that refreshed data may change over time as part of BOE (e.g., Webi, CR, Lumira).

Embodiments provide a framework employing a technique to apply the protection policy to the BOE documents, and to retrieve the policy while viewing the document by respective BOE Client Viewers. Accordingly, when a user performs scheduling to different external destinations such as SMTP, FTP, or SSH File Transfer Protocol (SFTP), or to CLOUD destinations such as GCP, AWS, or Azure, the sensitivity of the documents will be protected.

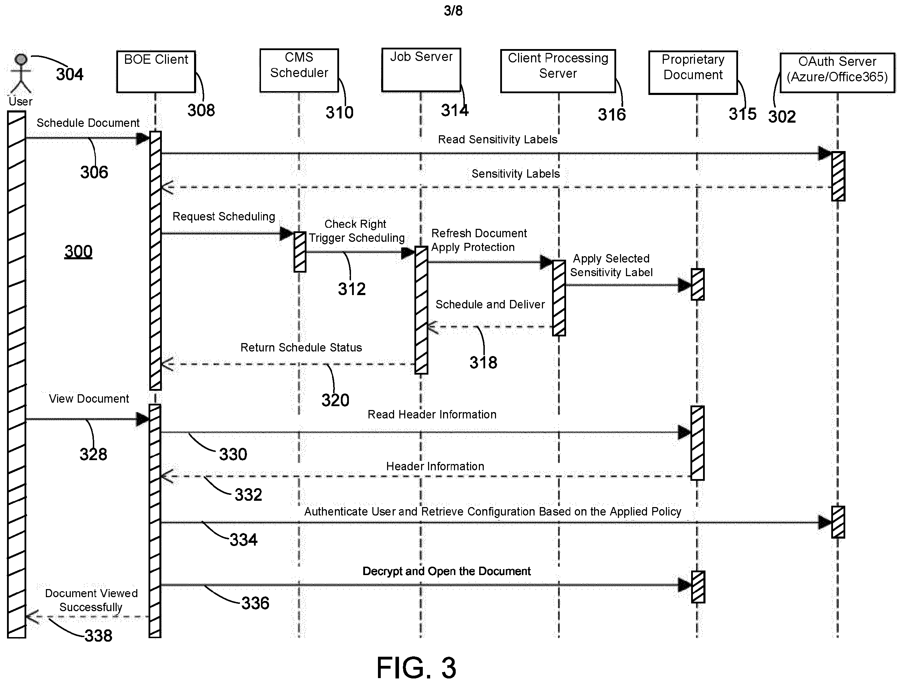

Actions to apply the policy to the BOE document during scheduling, are now shown and described in connection with the simplified workflow diagram 300 of Figure 3.
1. First, as just described above, the policies established by the organization administrative user in their respective OAuth server 302 are retrieved.
2. From the list of policies, user 304 selects a policy to be applied on the document.
   According to this example embodiment, the existing authentication framework is leveraged to authenticate to the OAuth server and read the policies. From the list of retrieved policies, the user selects a policy to be applied on the document.
3. The user clicks to schedule 306 the document with the BOE client 308.

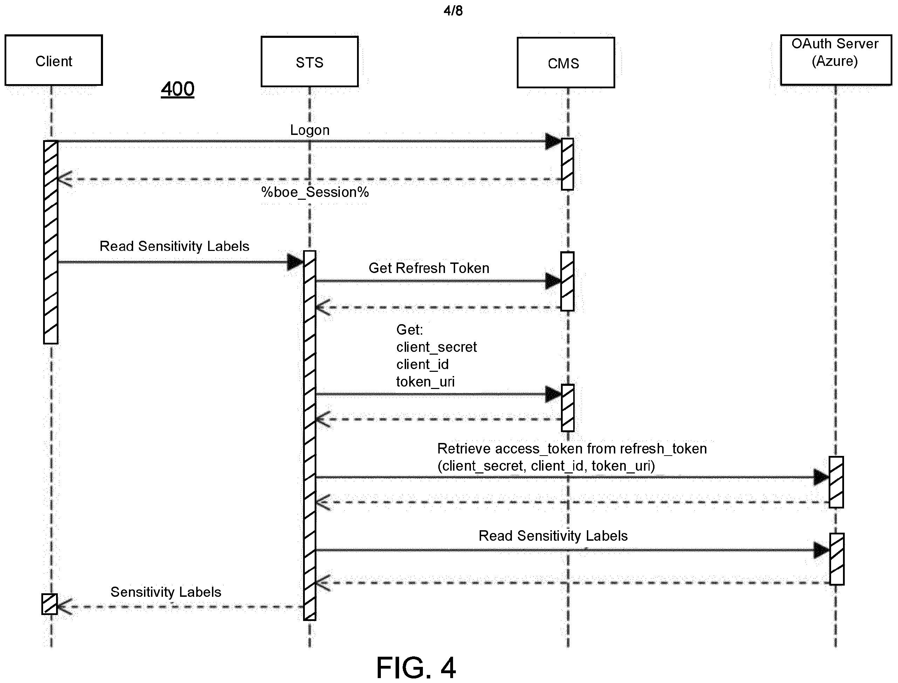

   Figure 4 shows details of a workflow 400 of reading sensitivity labels according to the example. The protection policies are previously set by the organization admin in their respective OAuth server.

Returning now to the overview workflow of Figure 3:
4. After checking rights of the user by the Central Management Service (CMS) 310, the scheduling of document is triggered 312.

5. The respective job processing server 314 applies the sensitivity label to the scheduled document via the header. The document will then accordingly be encrypted as per the sensitivity label. Encryption of the proprietary document 315 protects it from being viewed by unauthorized users (despite such unauthorized users actually having BOE Clients accessibility).

The document header may contain one or more of:
- the sensitivity label,
- symmetric key for encryption,
- the domain server details, and
- the issuer ID.

6. Once the schedule is successful, a schedule instance will be created in Output File Repository Server (OFRS) 316.

7. At 318, the schedule instance then will be delivered to the job server for communication to the respective destinations like FTP, SMTP, or others.

8. At 320, returning of the Final schedule status completes the scheduling workflow.

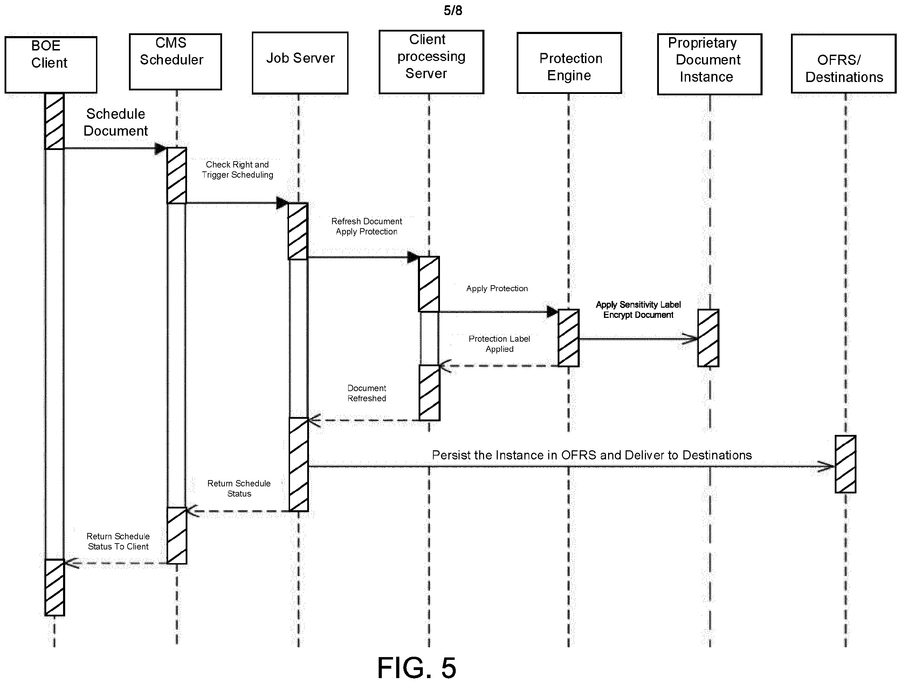

Details regarding application of the sensitivity label to the document instance are further shown in the workflow of Figure 5. In particular Figure 5 shows the role of the protection engine in allowing the respective processing server to apply the sensitivity label to the scheduled document as part of document header, and encryption of the document as per the sensitivity label. Figure 5 also shows the job server persisting the document instance in the OFRS and delivery to destination(s).

Returning again to the simplified flow diagram of Figure 3, actions to view a BOE document are now discussed. In particular:
1. In response to the user seeking 328 to view the document, the BOE client viewer sends request 330 to read the header of the document.
2. The BOE Client Viewer will then read the header section 332 and retrieve the policy details of the document.
3. At 334, the OAuth server will then try to authenticate the user based on the retrieved information and the applied policy protection. This will also help to respect the policy specific configuration established by the administrative user of the organization (e.g., sending an email or notification; and/or revoking the operation).
4. At 336, once authentication is successful, using the policy key the document will be decrypted and rendered for successful viewing 338 by the user.

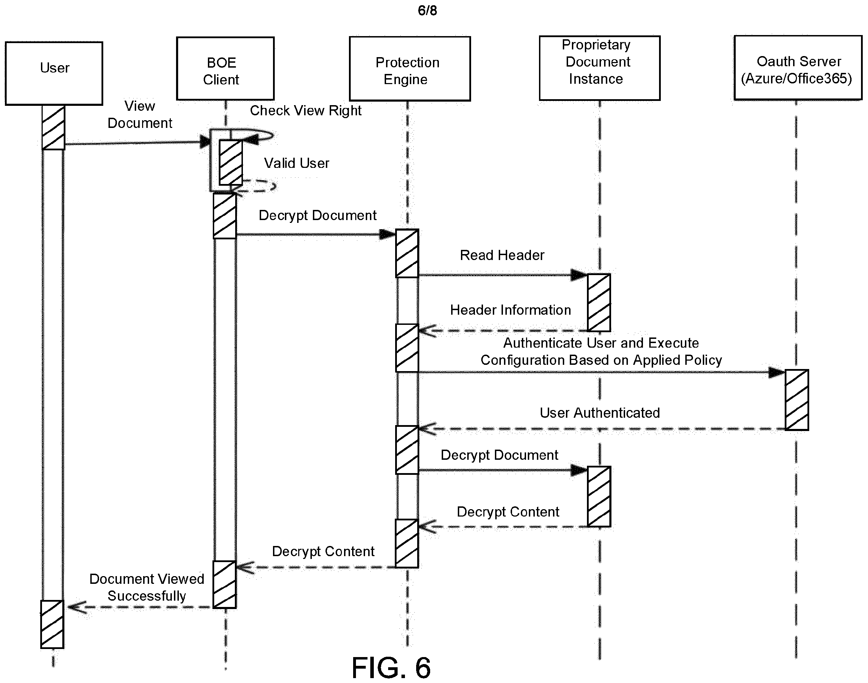

Figure 6 shows a detailed workflow to view a protected document. In particular:
1. The BOE client viewer verifies the user for the rights to view the document.
2. The BOE client will leverage the Protection Engine for assistance in reading the header section and retrieving the policy details of the document.
3. Then, the protection engine will try to authenticate the user based on the retrieved information and the applied policy protection. This activity by the protection engine can also help to respect the policy specific configuration set by the organization admin (e.g., sending an email or notification, revoking the operation, etc.)

Once authentication is successful, using the policy key the protection engine will decrypt the document to be rendered by the viewer.

Returning now to Figure 1, there the particular embodiment is depicted with the protection engine as being located outside of the database. However, this is not required.

Rather, alternative embodiments could leverage the processing power of an in-memory database engine (e.g., the in-memory database engine of the HANA in-memory database available from SAP SE), in order to perform one or more various functions as described above.

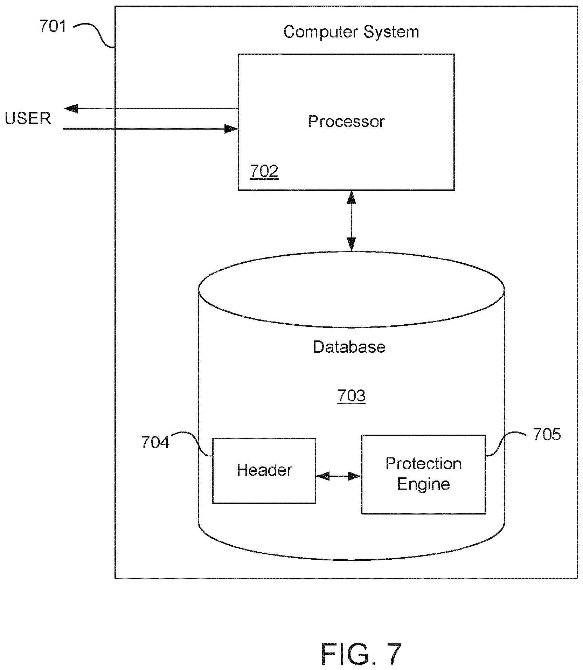

Thus Figure 7 illustrates hardware of a special purpose computing machine configured to perform document instance protection according to an embodiment. In particular, computer system 701 comprises a processor 702 that is in electronic communication with a non-transitory computer-readable storage medium comprising a database 703. This computer-readable storage medium has stored thereon code 705 corresponding to a protection engine. Code 704 corresponds to a header. Code may be configured to reference data stored in a database of a non-transitory computer-readable storage medium, for example as may be present locally or in a remote database server. Software servers together may form a cluster or logical network of computer systems programmed with software programs that communicate with each other and work together in order to process requests.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application:
Example 1. Computer implemented system and methods comprising:
   receiving a document scheduling request;
   in response to the document scheduling request, reading a protection policy including a sensitivity label, from an authorization service;
   encrypting content of the document and
   storing the document including the encrypted content and a header including the sensitivity label, in a non-transitory computer readable storage medium.
Example 2. The computer implemented system and method of Example 1 further comprising sending a schedule status.
Example 3. The computer implemented system and method of Example 1 or 2 further comprising:
   receiving a document view request;
   in response to the document view request, referencing the header to communicate with the authorization service;
   decrypting the content based upon information received from the authorization service; and providing the document including decrypted content for viewing.
Example 4. The computer implemented system and method of Examples 1, 2, or 3 wherein the authorization service comprises OAUTH.
Example 5. The computer implemented system and method of Example 1, 2, 3, or 4 wherein the header further comprises a cryptographic key.
Example 6. The computer implemented system and method of Example 1, 2, 3, 4, or 5 wherein the header further comprises an identifier.
Example 7. The computer implemented system and method of Examples 1, 2, 3, 4, 5, or 6 further wherein the header further comprises policy server details.
Example 8. The computer implemented system and method of Examples 1, 2, 3, 4, 5, 6, or 7 wherein:
   the non-transitory computer readable storage medium comprises an in-memory database; and
   an in-memory database engine of the in-memory database stores the header in the in-memory database.

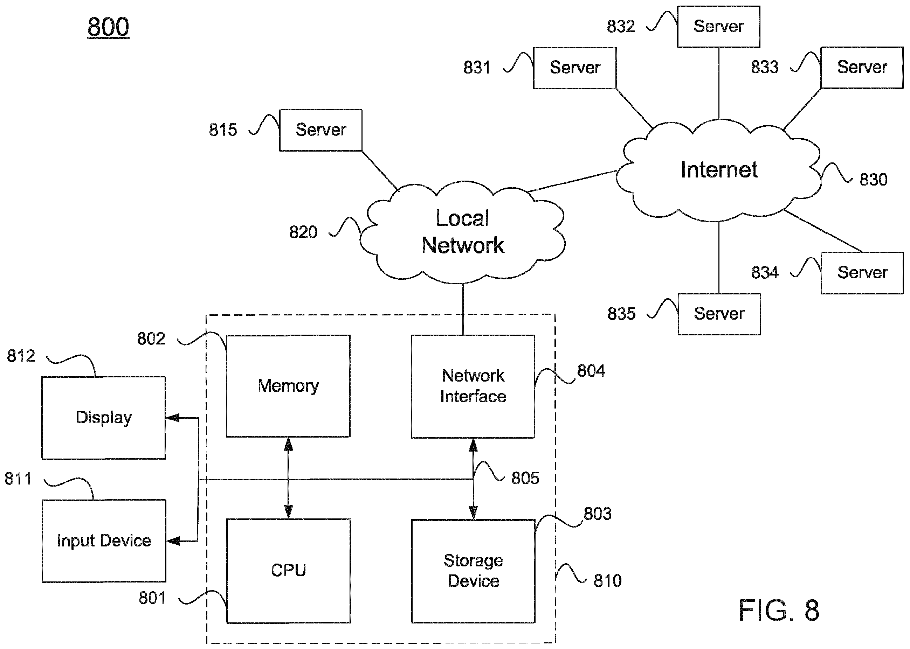

An example computer system 800 is illustrated in Figure 8. Computer system 810 includes a bus 805 or other communication mechanism for communicating information, and a processor 801 coupled with bus 805 for processing information. Computer system 810 also includes a memory 802 coupled to bus 805 for storing information and instructions to be executed by processor 801, including information and instructions for performing the techniques described above, for example. This memory may also be used for storing variables or other intermediate information during execution of instructions to be executed by processor 801. Possible implementations of this memory may be, but are not limited to, random access memory (RAM), read only memory (ROM), or both. A storage device 803 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 803 may include source code, binary code, or software files for performing the techniques above, for example. Storage device and memory are both examples of computer readable mediums.

Computer system 810 may be coupled via bus 805 to a display 812, such as a Light Emitting Diode (LED) or liquid crystal display (LCD), for displaying information to a computer user. An input device 811 such as a keyboard and/or mouse is coupled to bus 805 for communicating information and command selections from the user to processor 801. The combination of these components allows the user to communicate with the system. In some systems, bus 805 may be divided into multiple specialized buses.

Computer system 810 also includes a network interface 804 coupled with bus 805. Network interface 804 may provide two-way data communication between computer system 810 and the local network 820. The network interface 804 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 804 sends and receives electrical, electromagnetic, or optical signals that carry digital data streams representing various types of information.

Computer system 810 can send and receive information, including messages or other interface actions, through the network interface 804 across a local network 820, an Intranet, or the Internet 830. For a local network, computer system 810 may communicate with a plurality of other computer machines, such as server 815. Accordingly, computer system 810 and server computer systems represented by server 815 may form a cloud computing network, which may be programmed with processes described herein. In the Internet example, software components or services may reside on multiple different computer systems 810 or servers 831-835 across the network. The processes described above may be implemented on one or more servers, for example. A server 831 may transmit actions or messages from one component, through Internet 830, local network 820, and network interface 804 to a component on computer system 810. The software components and processes described above may be implemented on any computer system and send and/or receive information across a network, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A method comprising:
receiving a document scheduling request;
in response to the document scheduling request, reading a protection policy including a sensitivity label, from an authorization service;
encrypting content of the document; and
storing the document including the encrypted content and a header including the sensitivity label, in a non-transitory computer readable storage medium.

2. The method as in claim 1 further comprising sending a schedule status.

3. The method as in claim 1 or claim 2, further comprising:
receiving a document view request;
in response to the document view request, referencing the header to communicate with the authorization service;
decrypting the content based upon information received from the authorization service; and
providing the document including decrypted content for viewing, and optionally,
sending a notification by the authorization server for unauthorized access.

4. The method as in any one of claims 1 to 3, wherein the authorization service comprises OAUTH, and/or
wherein the header further comprises a cryptographic key, and/or
wherein the header further comprises an identifier, and/or
wherein the header further comprises policy server details.

5. The method as in any one of claims 1 to 4, wherein:
the non-transitory computer readable storage medium comprises an in-memory database; and
an in-memory database engine of the in-memory database stores the header in the in-memory database.

6. The method as in claim 5, wherein the in-memory database engine performs the encrypting.

7. A non-transitory computer readable storage medium embodying a computer program for performing a method, said method comprising:
receiving a document scheduling request;
in response to the document scheduling request, reading a protection policy including a sensitivity label, from an authorization service;
encrypting content of the document;
storing the document including the encrypted content and a header including the sensitivity label, in a non-transitory computer readable storage medium;
receiving a document view request;
in response to the document view request, referencing the header to communicate with the authorization service;
decrypting the content based upon information received from the authorization service; and
providing the document including decrypted content for viewing.

8. The non-transitory computer readable storage medium as in claim 7 wherein the method further comprises sending a schedule status after the storing.

9. The non-transitory computer readable storage medium as in claim 7 or 8 wherein the method further comprises sending a notification by the authorization service after the providing.

10. The non-transitory computer readable storage medium as in any one of claims 7 to 9, wherein the header further comprises at least one of:
a cryptographic key;
an identifier; and
policy server details.

11. A computer system comprising:
one or more processors;
a software program, executable on said computer system, the software program configured to cause an in-memory database engine of an in-memory database to:
receive a document scheduling request;
in response to the document scheduling request, read a protection policy including a sensitivity label, from an authorization service;
encrypt content of the document; and
store the document including the encrypted content and a header including the sensitivity label, in the in-memory database.

12. The computer system as in claim 11 wherein the in-memory database engine is further configured to send a schedule status.

13. The computer system as in claim 11 or 12, wherein the in-memory database engine is further configured to:
receive a document view request;
in response to the document view request, reference the header to communicate with the authorization server;
decrypt the content based upon information received from the authorization service; and
provide the document including decrypted content for viewing, and optionally,
wherein the in-memory database engine is further configured to cause the authorization server to send a notification.

14. The computer system as in any one of claims 11 to 13 wherein the header further comprises at least one of:
a cryptographic key;
an identifier; and
policy server details.

15. A computer system as in any one of claims 11 to 14 wherein the authorization service is OAUTH.
